# EUROPÄISCHE PATENTSCHRIFT

(11) **EP 0 965 237 B1**
(45) Veröffentlichungstag und Bekanntmachung des Hinweises auf die Patenterteilung: **05.12.2007**
(21) Anmeldenummer: 98966953.6
(22) Anmeldetag: 29.12.1998
(51) Int. Cl.: H04Q 7/24, H04Q 7/38

(54) **Verfahren zum übergeben von Betriebsparametern von einer Zentrale an ein örtlich begrenztes drahtloses Telekommunikationssystem und entsprechendes drahtloses Telekommunikationssytstem**
Method for transfering operating parameters from a control cennter to a locally limited wireless telecommunications system and a corresponding wireless telecommunications system
Procédé de transmission de parametres de fonctionnement émanant d'un central à un système de télécommunications sans fil localement et système de télécommunications sans fil

(30) Priorität: 08.01.1998 DE 19800378
(43) Veröffentlichungstag der Anmeldung: 22.12.1999
(73) Patentinhaber: Alcatel Lucent, 75008 Paris (FR)
(72) Erfinder: KÜHN, Edgar, Wolfram, D-70563 Stuttgart (DE); SPERBER, Christoph, D-75175 Pforzheim (DE); BARTH, Ulrich, D-70825 Münchingen (DE)
(74) Vertreter: Brose, Gerhard
(86) Internationale Anmeldenummer: PCT/EP1998/008581
(87) Internationale Veröffentlichungsnummer: WO 1999/035864

(56) Entgegenhaltungen:
- EP-A- 0 802 692
- WO-A-97/47125
- GB-A- 2 305 822
- US-A- 5 594 782

## Beschreibung

Die vorliegende Erfindung betrifft sowohl ein Verfahren zum Übergeben von Betriebsparametern von einer Zentrale an ein örtlich begrenztes drahtloses Telekommunikationssystem mit einer Basisstation und mit mindestens einer an dieser initialisierten Mobilstation als auch ein entsprechendes drahtloses Telekommunikationssystem zur Durchführung dieses Übergabeverfahrens mit einer Basisstation und mit mindestens einer an der Basisstation initialisierten Mobilstation.

Unter "initialisiert" ist dabei jede grundsätzlich für einen Betrieb mit der Basisstation eingerichtete Mobilstation und unter "registriert" eine initialisierte und in Kommunikationsverbindung mit der Basisstation stehende Mobilstation zu verstehen.

Ein bekanntes, örtlich nicht-begrenztes Telekommunikationssystem mit einer ortsfesten Funkvorrichtung (Basisstation) und mit beweglichen Funkvorrichtungen (Mobilstationen), die beide über eine Funkverbindung miteinander Funksignale austauschen, ist in dem Buch "The GSM System for Mobile Communications" beschrieben, das von den Autoren M. Mouly und M.-B. Pautet 1992 im Eigenverlag mit Sitz in Palaiseau, Frankreich herausgegeben worden ist. Das in dem Buch beschriebene Funkkommunikationssystem ist das öffentliche Mobilfunksystem "Global System for Mobile Communications" (GSM), dessen technische Komponenten den gleichnamigen Standard "GSM" erfüllen.

In diesem Buch ist auf den Seiten 424-427 in den Kapiteln 6.3.9. und 6.3.10. beschrieben, daß sich Betriebsparameter einer Mobilstation ändern, wenn sich ihr Standort ändert. Beispielsweise müssen sich die Frequenzeigenschaften eines Frequenzhopping-Kanals synchron zu anderen Mobilstationen ändern, um mit einem Wechsel der örtlich unterschiedlichen Frequenzen zurechtzukommen. Da im GSM-Netz ein Rundfunk-Signalisierungskanal (BCCH: braodcast control channel) vorgesehen ist, ist eine Signalisierungsverbindung mit den Mobilstationen zwecks Übergabe von Betriebsparametern jederzeit und problemlos möglich.

Bei drahtlosen örtlich begrenzten Telekommunikationssystemen (CTS = cordless telephone system) mit denen eine bestimmte Anzahl von Mobilstationen durch eine Basisstation mit örtlich begrenzter Reichweite betrieben werden -ohne daß ein BCCH vorgesehen sein muß-, ist eine zentrale Übergabe von Betriebsparametern jeweils an die Basisstation und an alle an ihr initialisierten Mobilstationen wünschenswert. Denn Betriebsparametersätze für das CTS, wie z.B. Frequenzlisten oder Frequenzsprungfolgen, können sich nach Vorgabe des Netzbetreibers (network operator, im weiteren auch kurz Operator genannt) eines öffentlichen mobilen Landfunknetzes (PLMN = public land mobile network) oder einer autorisierten Institution (z.B. eine staatliche Regulierungsbehörde zur Vergabe der Funkfrequenzlizenzen an die Nutzer) ändern. Diese Änderungen müssen an die Basisstationen (CTS-FP = CTS-fixed part) und die an ihnen initialisierten Mobilstationen (MS = Mobilstation) verteilt werden können, unabhängig davon, ob die Mobilstationen zum Zeitpunkt der Verteilung im drahtlosen Telekommunikationssystem gerade registriert sind oder nicht. Weiterhin können Mobilstationen entweder am CTS oder am GSM registriert sein (sogenannte "dual mode terminals"), je nach dem, ob sie sich innerhalb der Reichweite der CTS befinden oder nicht. Ein CTS unterliegt ferner der Randbedingung, daß keine Parameter über einen Rundsendekanal (broadcast carrier) übertragen werden können, und hat außerdem nicht notwendigerweise PLMN-Deckung:

Beispielsweise wenn ein neues CTS erstmals initialisiert werden soll, wenn eine periodische Betriebsparameter-Überprüfung durch das CTS erfolgen soll, wenn von einer Zentrale (Netzbetreiber oder autorisierte Institution) Änderungen veranlaßt werden oder wenn sich der CTS-Standort (z.B. infolge eines Umzugs) verändert. In solchen Fällen wird eine Übergabe (Update) von Betriebsparametern (Parametersätze) an die CTS-FP und an ihre MS erforderlich. Das Patent US 5594782 offenbart ein Verfahren zum Übergeben von Betriebsparametern an eine Basisstation.

Es ist daher die Aufgabe der vorliegenden Erfindung, ein Übergabeverfahren bereitzustellen, mit dem Betriebsparameter von einer Zentrale auf möglichst einfache Weise an ein oder an mehrere örtlich begrenzte drahtlose Telekommunikationssysteme zentral verteilt und aktiviert werden können, sowie ein entsprechendes drahtloses Telekommunikationssystem bereitzustellen.

Diese Aufgabe wird gelöst durch ein Verfahren mit den Merkmalen des Anspruchs 1 und durch ein drahtloses Telekommunikationssystem mit den Merkmalen des nebengeordneten Anspruchs.

Demnach wird die Aufgabe erfindungsgemäß dadurch gelöst, daß über ein überlagertes Telekommunikationsnetz die Betriebsparameter zunächst an die Basisstation oder an eine ihrer Mobilstationen übergeben und dann von der Basisstation an möglichst alle initialisierten Mobilstationen bzw. von der einen Mobilstation sowohl an die Basisstation als auch an möglichst alle weiteren initialisierten Mobilstationen weitergegeben und aktiviert werden. Die Zentrale ist dazu mit dem überlagerten Telekommunikationsnetz (sogenanntes "overlay network") verbunden.

Das erfindungsgemäße Verfahren ermöglicht es der Zentrale und damit auch dem PLMN-Betreiber oder der autorisierten Institution, mittelbar oder unmittelbar Änderungen an CTS-Betriebsparametern (Parametersätze) vorzunehmen und diese Betriebsparameter zu aktivieren. Der Transfer von Betriebsparametern erfolgt zweistufig: Zunächst werden von der Zentrale aus die Betriebsparameter an das CTS, nämlich an die Basisstation oder an eine von deren Mobilstationen, übergeben. Anschließend werden diese Betriebsparameter, von der Zentrale unabhängig, innerhalb des CTS verteilt, also an die dort vorhandenen Basis- und Mobilstationen weitergeleitet.

Bei einer bevorzugten Ausgestaltung des erfindungsgemäßen Übergabeverfahrens ist das überlagerte Telekommunikationsnetz ein drahtgebundenes Telekommunikationnetz, etwa ein PSTN (= public switched telephone network) oder ein ISDN (= integrated services digital network). Der Transfer von Betriebsparametern kann eingeleitet werden, indem der Netzbetreiber (Operator) oder die autorisierte Institution die Basisstation über das PSTN oder ISDN anruft und die Betriebsparameter an die Basisstation übergibt.

Insbesondere bei einer periodischen Betriebsparameter-Überprüfung durch die Basisstation ist es von Vorteil, wenn die Übergabe von Betriebsparametern von der Basisstation bzw. von der einen Mobilstation, d.h. von dem CTS, selbst veranlaßt wird. Zum Beispiel kann die Basisstation den Netzbetreiber über das PSTN oder das ISDN anrufen. Damit kann optional ein Rückruf durch den Netzbetreiber oder die autorisierte Institution erfolgen.

Oder eine Mobilstation ruft den Netzbetreiber über das PLMN an, speichert die Betriebsparameter auf ihrer Teilnehmer-Identifizierungskarte (SIM = subscriber identification module) oder in einer sonstigen mobilen Einrichtung (ME = mobile equipment) zwischen und transferiert sie erst später zur Basisstation.

Insbesondere wenn einer an der Basisstation initialisierten, aber aufgrund zu großer Entfernung gerade nicht an der Basisstation registrierten, Mobilstation Betriebsparameter vom Netzbetreiber übergeben werden, speichert diese eine Mobilstation die ihr übertragenen Betriebsparameter zunächst zwischen und leitet sie erst später, wenn sie sich in entsprechender Reichweite befindet, an die Basisstation weiter. Der Netzbetreiber oder die autorisierte Institution ruft eine Mobilstation via PLMN an. Die Mobilstation speichert die Betriebsparameter im SIM oder ME zwischen und transferiert sie später zur Basisstation. Die Übergabe vom Netzbetreiber an die Mobilstation kann über ein überlagertes drahtloses Netz (z.B. über das GSM-Netz) erfolgen, über das die übergebenen Betriebsparameter von der Mobilstation auch unmittelbar an andere Mobilstationen des CTS weitergeleitet werden können.

Bei besonders bevorzugter Ausgestaltung des erfindungsgemäßen Übergabeverfahrens werden erst nach Weitergabe der Betriebsparameter an zumindest alle registrierten Mobilstationen diese Betriebsparameter in der Basisstation und in diesen Mobilstationen , vorzugweise zeitgleich, aktiviert. Die nicht-registrierten Mobilstationen, die ja noch nicht in Kommunikationsverbindung mit der Basisstation stehen, benötigen die Betriebsparameter nicht sofort, sondern spätestens erst dann, wenn sie die Kommunikationsverbindung mit der Basisstation aufnehmen, d.h. wenn sie registriert werden. Das bedeutet, daß die Verteilung der Betriebsparameter an registrierte Mobilstationen im CTS-Mode erfolgt und danach die Aktivierung der neuen Betriebsparameter in der Basisstation und in den registrierten Mobilstationen.

Obwohl die nicht-registrierten Mobilstationen nicht in Kommunikationsverbindung mit der Basisstation stehen, kann bei weiterer vorteilhafter Verfahrensausgestaltung die Basisstation die Betriebsparameter an nicht-registrierte, aber initialisierte, Mobilstationen über das bzw. ein anderes überlagertes Telekommunikationsnetz weitergeben. So kann der Transfer der Betriebsparameter an jede nicht-registrierte Mobilstation über ein Mobilfunknetz, z.B. GSM erfolgen, indem die Basisstation selbst oder über den Netzbetreiber diese Mobilstation über das GSM gezielt anruft und ihr die Betriebsparameter individuell übermittelt.

In einer Weiterbildung dieser Verfahrensausgestaltung ist es auch möglich, die Betriebsparameter von der Basisstation als Kurznachricht an nicht-registrierte, initialisierte Mobilstationen weiterzugeben. Kurznachrichten-Übermittlung, sogenanntes SMS (= short message service), ist bisher als optionales Leistungsmerkmal in Mobilfunknetzen bekannt. Mit SMS können z.B. bis zu 160 Zeichen einem Teilnehmer übermittelt werden, auch wenn die Mobilstation nicht eingeschaltet ist. Der Text wird im Netz zwischengespeichert, dem Teilnehmer das Vorliegen einer Information beim nächsten Einschalten signalisiert und auf Abruf übertragen.

Die Betriebsparameter können auch über ein drahtgebundenes überlagertes Telekommunikationssystem von der Basisstation, z.B. über das PSTN oder ISDN, weitergegeben werden.

In einer alternativen Verfahrensvariante ist hingegen vorgesehen, daß die Betriebsparameter, veranlaßt von der Basisstation, über eine Mobilstation, bei der die Betriebsparameter bereits aktiviert sind, an nicht-registrierte initialisierte Mobilstationen über ein drahtloses überlagertes Telekommunikationsnetz (PLMN, z.B. das Mobilfunknetz GSM) weitergeleitet werden. Dies kann dann geschehen, wenn das oder die gerade auch im PLMN nicht registrierten Mobilstationen später wieder im PLMN registriert sind.

Vorzugsweise gibt die Basisstation, sobald sich eine bisher nicht-registrierte, initialisierte Mobilstation an ihr registriert, die Betriebsparameter an diese Mobilstation weiter.

In weiterer Verfahrensausgestaltung weisen alle an der Basisstation initialisierten Mobilstationen eine vorgegebene einheitliche Prozedur zur Registrierung, über die trotz unterschiedlicher Betriebsparameter zwischen Basisstation und einer Mobilstation eine Weitergabe der Betriebsparameter von der Basisstation an die Mobilstation sowie deren Aktivierung erfolgt. Vorzugsweise wird eine Startsequenz in Form einer vorgegebenen Frequenzsprungfolge für die Registrierung benutzt. Die Verteilung der Betriebsparameter an initialisierte, aber nicht registrierte Mobilstationen erfolgt derart, daß nach erfolgter Aktivierung der neuen Betriebsparameter in der Basisstation diese Mobilstationen über die bekannte Frequenzsprungfolge-Startsequenz, die ein gemeinsames Geheimnis zwischen der Basisstation und den initialisierten Mobilstationen ist, Verbindung zur Basisstation aufnehmen und die Betriebsparameter laden und aktivieren. Diese Startsequenz bietet die Sicherheit, daß nach Scheitern aller geschilderten Übergabeverfahren dennoch eine Verbindungsaufnahme möglich bleibt.

Die bisher geschilderten Verfahren haben für die Benutzer den Vorteil, daß sie im Hintergrund und automatisch ablaufen können.

Eine weitere Sicherheit ist dadurch gegeben, daß nicht-registrierte initialisierte Mobilstationen über eine der Basisstation zugeordnete, drahtgebundene oder drahtlose Schnittstelle mit der Basisstation für eine Übergabe von Betriebsparametern manuell verbindbar sind. Die Mobilstation kann z.B. an eine lnfrarot(IR)-Schnittstelle der Basisstation angeschlossen werden und nach abgeschlossenem Transfer die Aktivierung der Betriebsparameter erfolgen. Dieses Übergabeverfahren, das z.B. als "Notfallszenario" eingesetzt werden kann, wenn zuvor die Übertragung der Betriebsparameter über das PLMN (Luftschnittstelle) nicht erfolgreich war, könnte auf dem Weg gestartet werden, daß die Basisstation und die betroffene Mobilstation manuell in einen entsprechenden "Notfallmodus" gebracht werden.

Die Aktivierung der neuen Betriebsparameter kann zeitlich unmittelbar oder terminiert erfolgen. Die Weitergabe von Betriebsparametern an initialisierte Mobilstationen und deren Aktivierung können entsprechend ihrem Registrierungszustand (registriert oder nicht-registriert) und dem jeweils verwendeten Übergabeverfahren zeitversetzt verlaufen.

Vorzugsweise ist eine Mobilstation an mehreren drahtlosen Telekommunikationssystemen initialisiert bzw. initialisierbar.

Diese verschiedenen Übergabeverfahrensvarianten können einzeln oder in beliebiger Kombination angewendet werden, wobei dafür vorbestimmte Eskalationsstufen vorgesehen sein können, um nacheinander alle initialisierten Mobilstationen mit den neuen Betriebsparameter zu versorgen Weiterhin können die geschilderten Übergabeverfahrensvarianten sowohl bei einem BCCH-losen Protokoll (BCCH = braoadcast channel) als auch bei Verwendung eines BCCH-Kanals angewendet werden. Außerdem können diese Übergabeverfahrensvarianten außer auf "full rate traffic channels" auch auf "half rate traffic channels" angewendet werden. Das erfindungsgemäße Übergabeverfahren läßt sich auf solche TDMA-Systeme (TDMA = time division multiple access) oder auch auf CDMA-Systeme (CDMA = code division multiple access) anwenden sowie auf Mischsystemen daraus. Als Betriebsparameter können z.B. Trägerfrequenzen, Frequenzsprungschemata, HF-Leistungsparameter, Startsequenzen oder Funkübertragungsmodi (half/full-rate, CDMA codes) usw. übertragen werden.

Die oben genannte Aufgabe wird bei einem drahtlosen Telekommunikationssystem der eingangs genannten Art erfindungsgemäß dadurch gelöst, daß über ein überlagertes Telekommunikationsnetz von einer Zentrale Betriebsparameter zunächst an die Basisstation oder an eine ihrer Mobilstationen übergebbar und dann von der Basisstation an möglichst alle initialisierten Mobilstationen bzw. von der einen Mobilstation sowohl an die Basisstation als auch an möglichst alle weiteren initialisierten Mobilstationen weitergebbar und aktivierbar sind.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

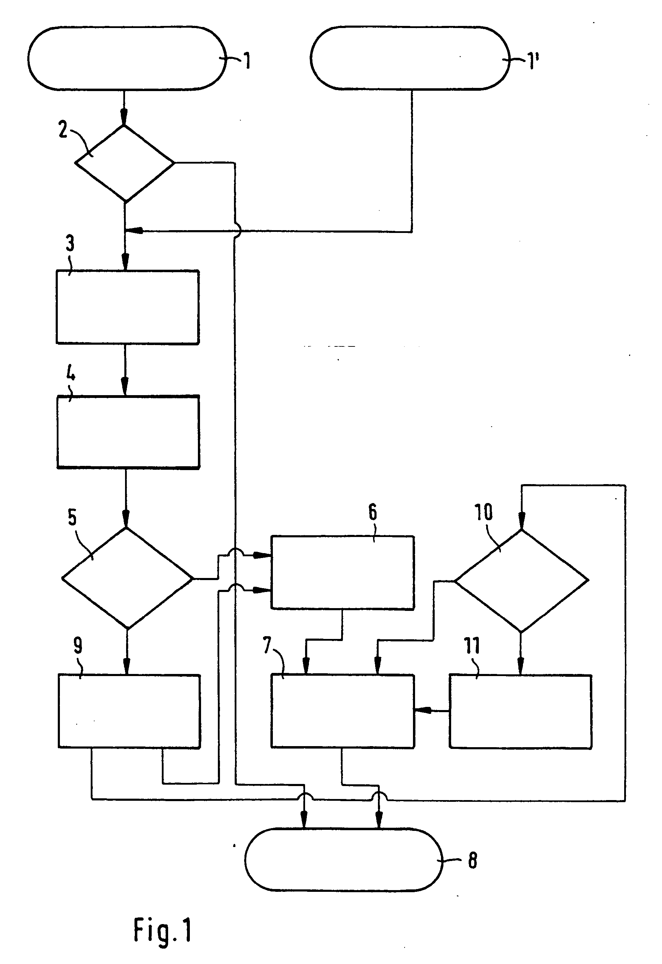

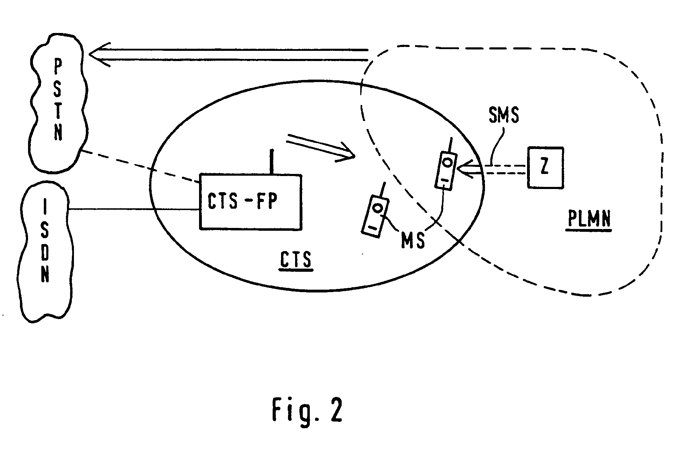

Die Erfindung ist in den Zeichnung 1 und 2 dargestellt und wird anhand eines Ausführungsbeispiels näher erläutert. Die Figur 1 zeigt stark schematisch ein erfindungsgemäßes Ablaufdiagramm zur Verteilung von Betriebsparametern. Die Figur 2 zeigt schematisch den Aufbau eines drahtlosen Telekommunikationssystems zur Durchführung dieses Verfahrens. Beide Figuren werden in der folgenden Beschreibung zusammen betrachtet:

Gezeigt wird ein drahtloses Telekommunikationssystem CTS mit einer Basisstation CTS-FP und mit mindestens einer an der Basisstation initialisierten Mobilstation MS, bei dem eine Zentrale Z eines überlagerten Telekommunikationsnetzes PLMN über das überlagerte Telekommunikationsnetz Betriebsparameter zunächst an die Basisstation CTS-FP (über ein weiteres Netz PSTN oder ISDN) oder an eine der Mobilstationen MS des drahtlosen Telekommunikationssystems CTS (über die Luftschnittstelle des PLMN) übergibt. Von dort aus werden dann die Betriebsparameter an möglichst alle initialisierten Mobilstationen bzw. an die Basisstation als auch an möglichst alle weiteren initialisierten Mobilstationen zur Aktivierung weitergegeben.

Im Ablaufdiagramm sind zwei Verfahrensvarianten zum Übergeben von Betriebsparametern an ein drahtloses Telefonsystem (CTS) dargestellt, nämlich die Initiierung der Übergabe (Transfer) durch das CTS selbst (Schritt 1) oder die Initiierung der Übergabe durch einen Netzbetreiber (Schritt1').

Im ersten Fall (Schritt 1) wird zunächst abgefragt (Schritt 2), ob sich die zu übergebenden Betriebsparameter von den bisher verwendeten Betriebsparameter unterscheiden oder nicht. Im letzteren Fall ist keine Übergabe bzw. kein Update erforderlich, so daß der Transfer und die Aktivierung der Betriebsparameter bereits beendet sind (Schritt 8).

Wenn neue Betriebsparameter zu übergeben sind bzw. wenn die Übergabe durch den Netzbetreiber initiiert ist (Schritt 1'), werden die neuen Betriebsparameter von dem Netzbetreiber an die Basisstation, z.B. an eine CTS-FP, übergeben (geladen) (Schritt 3). Von der Basisstation werden die neuen Betriebsparameter an die an ihr registrierten Mobilstationen (MS) verteilt bzw. weitergegeben (Schritt 4).

In einem weiteren Schritt 5 wird abgefragt, ob alle an der Basisstation initialisierten Mobilstationen registriert sind und damit die Verteilung der Betriebsparameter schon beendet ist. Im positiven Fall werden die neuen Betriebsparameter sowohl in der Basisstation (Schritt 6) als auch in den Mobilstationen aktiviert (Schritt 7), so daß der Transfer und die Aktivierung der neuen Betriebsparameter beendet sind (Schritt 8). Ergibt die Abfrage in Schritt 5 eine negative Antwort, wird versucht, in einem weiteren Schritt 9 die neuen Betriebsparameter z.B. mittels SMS via PLMN an die restlichen, gerade nicht-registrierten Mobilstationen weiterzugeben. Danach werden die neuen Betriebsparameter in der Basisstation und in den registrierten Mobilstationen aktiviert (Schritt 6 und Schritt 7).

In einem ebenfalls dem Schritt 9 nachfolgenden weiteren Schritt 10 wird jeweils geprüft, ob die Übergabe der neuen Betriebsparameter an eine nicht-registrierte Mobilstation erfolgreich war oder nicht. Im positiven Fall werden die neuen Betriebsparameter auch in dieser Mobilstation aktiviert (Schritt 7). Im negativen Fall erfolgt die Weitergabe bzw. Verteilung der neuen Betriebsparameter an die nicht-registrierte Mobilstation erst später z.B. über eine drahtgebundene Schnittstelle (Schritt 11), woraufhin die neuen Betriebsparameter auch in dieser Mobilstation aktiviert werden (Schritt 7). Wenn die neuen Betriebsparameter an die Basisstation sowie an alle an ihr initialisierten Mobilstationen weitergegeben und aktiviert worden sind, ist das Übergabeverfahren beendet (Schritt 8).

## Patentansprüche

1. Verfahren zum Übergeben von Betriebsparametern an ein örtlich begrenztes drahtloses Telekommunikationssystem (CTS) mit einer Basisstation (CTS-FP) und mit mindestens einer an dieser initialisierten Mobilstation (MS) von einer Zentrale (Z) eines überlagerten Telekommunikationsnetzes (PLMN; PSTN, ISDN) aus, wobei über das überlagerte Telekommunikationsnetz die Betriebsparameter zunächst an die Basisstation (CTS-FP) oder an eine ihrer Mobilstationen (MS) übergeben werden, **dadurch gekennzeichnet dass** dann von der Basisstation (CTS-FP) an möglichst alle initialisierten Mobilstationen bzw. von der einen Mobilstation (MS) sowohl an die Basisstation (CTS-FP) als auch an möglichst alle weiteren initialisierten Mobilstationen (MS) weitergegeben und aktiviert werden.

2. Verfahren nach Anspruch 1, **dadurch gekennzeichnet, daß** das überlagerte Telekommunikationsnetz ein drahtgebundenes Telekommunikationsnetz (PSTN, ISDN) ist, mit dem die Basisstation (CTS-FP) verbunden ist, oder ein drahtloses Telekommunikationsnetz (PLMN) ist, mit dem die Basisstation (CTS-FP) oder die eine Mobilstation (MS) drahtlos verbunden sind.

3. Verfahren nach Anspruch 1, **dadurch gekennzeichnet, daß** die eine Mobilstation (MS) die ihr übertragenen Betriebsparameter zunächst zwischenspeichert und erst später an die Basisstation (CTS-FP) oder weitere Mobilstationen (MS) weiterleitet.

4. Verfahren nach einem der vorhergehenden Ansprüche, **dadurch gekennzeichnet, daß** nach Weitergabe der Betriebsparameter an alle registrierten Mobilstationen (MS) diese Betriebsparameter in der Basisstation (CTS-FP) und in diesen Mobilstationen (MS) aktiviert werden.

5. Verfahren nach einem der vorhergehenden Ansprüche, **dadurch gekennzeichnet, daß** von der Basisstation (CTS-FP) die Betriebsparameter an nicht-registrierte, aber initialisierte, Mobilstationen (MS) weitergegeben werden, indem die Betriebsparameter zunächst an das oder an ein anderes überlagertes Telekommunikationsnetz geleitet werden und dann von dort aus drahtlos, vorzugsweise als Kurznachricht, SMS = short message service, an diese nicht-registrierten Mobilstationen (MS) weitergegeben werden.

6. Verfahren nach Anspruch 5, **dadurch gekennzeichnet, daß** die Betriebsparameter, veranlaßt von der Basisstation (CTS-FP), über eine Mobilstation (MS), bei der die Betriebsparameter bereits aktiviert sind, an nicht-registrierte initialisierte Mobilstationen (MS) über ein drahtloses überlagertes Telekommunikationsnetz weitergeleitet werden.

7. Verfahren nach einem der vorhergehenden Ansprüche, **dadurch gekennzeichnet, daß** die Basisstation (CTS-FP), sobald sich eine bisher nicht-registrierte, initialisierte Mobilstation (MS) an ihr registriert, die Betriebsparameter an diese Mobilstation (MS) weitergibt.

8. Verfahren nach einem der vorhergehenden Ansprüche, **dadurch gekennzeichnet, daß** alle an der Basisstation (CTS-FP) initialisierten Mobilstationen (MS) eine vorgegebene einheitliche Registrierungsprozedur, insbesondere eine vorgegebene Frequenzsprungfolge, durchführen, mittels derer trotz unterschiedlicher Betriebsparameter zwischen Basisstation (CTS-FP) und einer Mobilstation (MS) eine Weitergabe der Betriebsparameter von der Basisstation (CTS-FP) an die Mobilstation (MS) sowie deren Aktivierung erfolgt.

9. Verfahren nach einem der vorhergehenden Ansprüche, **dadurch gekennzeichnet, daß** nicht-registrierte, aber initialisierte, Mobilstationen (MS) über eine der Basisstation (CTS-FP) zugeordnete, vorzugsweise drahtlose, Schnittstelle mit der Basisstation (CTS-FP) für eine Übergabe von Betriebsparametern verbindbar sind.

10. Verfahren nach einem der vorhergehenden Ansprüche, **dadurch gekennzeichnet, daß** die Weitergabe von Betriebsparametern an initialisierte Mobilstationen (MS) und deren Aktivierung entsprechend ihrem Registrierungszustand und dem jeweils verwendeten Übergabeverfahren zeitversetzt verlaufen.

11. Verfahren nach einem der vorhergehenden Ansprüche, **dadurch gekennzeichnet, daß** eine Mobilstation (MS) an mehreren drahtlosen Telekommunikationssystemen (CTS) initialisierbar ist.

12. Verfahren nach einem der vorhergehenden Ansprüche, **dadurch gekennzeichnet, daß** die Übertragung der Betriebsparameter von der Zentrale (Z) oder von der Basisstation (CTS-FP) in periodischen Zeitabständen veranlaßt wird.

13. Drahtloses Telekommunikationssystem (CTS), insbesondere zur Durchführung des Verfahrens nach einem der vorhergehenden Ansprüche, mit einer Basisstation (CTS-FP) und mit mindestens einer an der Basisstation (CTS-FP) initialisierten Mobilstation (MS), bei dem eine Zentrale (Z) eines überlagerten Telekommunikationsnetzes (PLMN; PSTN, ISDN), über das überlagerte Telekommunikationsnetz Betriebsparameter zunächst an die Basisstation (CTS-FP) oder an eine der Mobilstationen (MS) des drahtlosen Telekommunikationssystems (CTS) übergibt **dadurch gekennzeichnet, daß** dann die Basisstation (CTS-FP) an möglichst alle initialisierten Mobilstationen bzw. die eine Mobilstation (MS) sowohl an die Basisstation (CTS-FP) als auch an möglichst alle weiteren initialisierten Mobilstationen (MS) die Betriebsparameter zur Aktivierung weitergibt.

## Claims

1. Procedure for transferring operating parameters from a control centre (Z) of an overlay telecommunications network (PLMN; PSTN, ISDN) to a locally limited wireless telecommunications system (CTS) having a base station (CTS-FP) and having at least one mobile station (MS) initialized at the latter, wherein the operating parameters are first transferred to the base station (CTS-FP) or to one of its mobile stations (MS) via the overlay telecommunications network, **characterized in that** they are then forwarded from the base station (CTS-FP) to insofar as possible all initialized mobile stations, or from the one mobile station (MS) both to the base station (CTS-FP) and insofar as possible all other initialized mobile stations (MS), and activated.

2. Procedure according to Claim 1, **characterized in that** the overlay telecommunications network is a wire-bound telecommunications network (PSTN, ISDN), to which the base station (CTS-FP) is connected, or is a wireless telecommunications network (PLMN), to which the base station (CTS-FP) or the one mobile station (MS) is wirelessly connected.

3. Procedure according to Claim 1, **characterized in that** the one mobile station (MS) first buffers the operating parameters transmitted to it, and transfers them only later to the base station (CTS-FP) or other mobile stations (MS).

4. Procedure according to any one of the preceding claims, **characterized in that**, following transfer of the operating parameters to all registered mobile stations (MS), these operating parameters are activated in the base station (CTS-FP) and in these mobile stations (MS).

5. Procedure according to any one of the preceding claims, **characterized in that** the operating parameters are forwarded from the base station (CTS-FP) to non-registered, but initialized, mobile stations (MS), **in that** the operating parameters are first routed to the overlay telecommunications network or another overlay telecommunications network, and from there are then forwarded wirelessly, preferably as a short message (SMS) to these non-registered mobile stations (MS).

6. Procedure according to Claim 5, **characterized in that**, at the initiation of the base station (CTS-FP), the operating parameters are forwarded, via a mobile station (MS) in which the operating parameters are already activated, to non-registered, initialized mobile stations (MS) via a wireless overlay telecommunications network.

7. Procedure according to any one of the preceding claims, **characterized in that**, as soon as a previously non-registered, initialized mobile station (MS) registers at the base station (CTS-FP), the latter forwards the operating parameters to this mobile station (MS).

8. Procedure according to any one of the preceding claims, **characterized in that** all mobile stations (MS) initialized at the base station (CTS-FP) execute a predefined, uniform registration procedure, in particular a predefined frequency-hop sequence, by means of which, despite operating parameter differences between the base station (CTS-FP) and a mobile station (MS), the operating parameters are forwarded from the base station (CTS-FP) to the mobile station (MS), and are activated.

9. Procedure according to any one of the preceding claims, **characterized in that** non-registered, but initialized mobile stations (MS) can be connected to the base station (CTS-FP), for the purpose of transferring operating parameters, via a preferably wireless interface associated with the base station (CTS-FP).

10. Procedure according to any one of the preceding claims, **characterized in that** the forwarding of operating parameters to initialized mobile stations (MS), and the activation of these operating parameters, are executed with a time delay according to the registration status of the mobile stations and the respectively applied transfer procedure.

11. Procedure according to any one of the preceding claims, **characterized in that** a mobile station (MS) can be initialized at a plurality of wireless telecommunications systems (CTS).

12. Procedure according to any one of the preceding claims, **characterized in that** the transmission of the operating parameters from the control centre (Z) or from the base station (CTS-FP) is initiated at periodic intervals of time.

13. Wireless telecommunications system (CTS), in particular for performing the procedure according to any one of the preceding claims, having a base station (CTS-FP) and having at least one mobile station (MS) initialized at the base station (CTS-FP), in which telecommunications system a control centre (Z) of an overlay telecommunications network (PLMN; PSTN, ISDN) first transfers operating parameters to the base station (CTS-FP) or to one of the mobile stations (MS) of the wireless telecommunications system (CTS) via the overlay telecommunications network, **characterized in that** the base station (CTS-FP) then forwards the operating parameters to insofar as possible all initialized mobile stations, or the one mobile station (MS) forwards the operating parameters both to the base station (CTS-FP) and insofar as possible all other initialized mobile stations (MS), for the purpose of their activation.

## Revendications

1. Procédé de transfert des paramètres de fonctionnement depuis un central d'un réseau de télécommunication superposé (PLMN ; RTPC, RNIS) vers un système de télécommunication sans fil (CTS) localement limité comprenant une station de base (CTS-FP) et au moins une station mobile (MS) initialisée auprès de celle-ci, les paramètres de fonctionnement étant tout d'abord transférés à la station de base (CTS-FP) ou à l'une de ses stations mobiles (MS) par le biais du réseau de télécommunication superposé, **caractérisé en ce qu'**ils sont ensuite retransmis de la station de base (CTS-FP) si possible vers toutes les stations mobiles (MS) initialisées ou de la station mobile (MS) à la fois vers la station de base (CTS-FP) et si possible vers toutes les autres stations mobiles (MS) initialisées, puis activés.

2. Procédé selon la revendication 1, **caractérisé en ce que** le réseau de télécommunication superposé est un réseau de télécommunication filaire (RTPC, RN1S) avec lequel la station de base (CTS-FP) est reliée ou un réseau de télécommunication sans fil (PLMN) avec lequel la station de base (CTS-FP) ou la station mobile (MS) sont connectées sans fil.

3. Procédé selon la revendication 1, **caractérisé en ce que** la station mobile (MS) enregistre tout d'abord temporairement les paramètres de fonctionnement qui lui sont transmis et ne les retransmet qu'ultérieurement à la station de base (CTS-FP) ou aux autres stations mobiles (MS).

4. Procédé selon l'une des revendications précédentes, **caractérisé en ce qu'**après la retransmission des paramètres de fonctionnement à toutes les stations mobiles (MS) enregistrées, ces paramètres de fonctionnement sont activés dans la station de base (CTS-FP) et dans ces stations mobiles (MS).

5. Procédé selon l'une des revendications précédentes, **caractérisé en ce que** les paramètres de fonctionnement sont retransmis de la station de base (CTS-FP) aux stations mobiles (MS) non enregistrées mais initialisées **en ce que** les paramètres de fonctionnement sont tout d'abord acheminés vers le réseau de télécommunication superposé ou à un autre et ensuite de là sont retransmis sans fil, de préférence sous la forme de messages courts (SMS = service de message court) à ces stations mobiles (MS) non enregistrées.

6. Procédé selon la revendication 5, **caractérisé en ce que** les paramètres de fonctionnement, sur ordre de la station de base (CTS-FP), sont retransmis par le biais d'une station mobile (MS) sur laquelle les paramètres de fonctionnement sont déjà activés aux stations mobiles (MS) initialisées non enregistrées par le biais d'un réseau de télécommunication superposé sans fil.

7. Procédé selon l'une des revendications précédentes, **caractérisé en ce que** la station de base (CTS-FP) retransmet les paramètres de fonctionnement à une station mobile (MS) initialisée et actuellement non enregistrée dès que cette station mobile (MS) s'enregistre auprès d'elle.

8. Procédé selon l'une des revendications précédentes, **caractérisé en ce que** toutes les stations mobiles (MS) initialisées auprès de la station de base (CTS-FP) exécutent une procédure d'enregistrement homogène prédéfinie, notamment une séquence de sauts de fréquence au moyen de laquelle s'effectuent une retransmission des paramètres de fonctionnement de la station de base (CTS-FP) vers la station mobile (MS) ainsi que leur activation, et ce malgré des paramètres de fonctionnement différents entre la station de base (CTS-FP) et une station mobile (MS).

9. Procédé selon l'une des revendications précédentes, **caractérisé en ce que** les stations mobiles (MS) non enregistrées mais initialisées peuvent être reliées avec la station de base (CTS-FP) pour un transfert de paramètres de fonctionnement par le biais d'une interface de préférence sans fil associée à la station de base (CTS-FP).

10. Procédé selon l'une des revendications précédentes, **caractérisé en ce que** la retransmission des paramètres de fonctionnement aux stations mobiles (MS) initialisées ainsi que leur activation se déroulent avec un décalage dans le temps en fonction de leur situation d'enregistrement et du procédé de transfert à chaque fois employé.

11. Procédé selon l'une des revendications précédentes, **caractérisé en ce qu'**une station mobile (MS) peut être initialisée sur plusieurs systèmes de télécommunication sans fil (CTS).

12. Procédé selon l'une des revendications précédentes, **caractérisé en ce que** la transmission des paramètres de fonctionnement est ordonnée périodiquement par le central (Z) ou par la station de base (CTS-FP).

13. Système de télécommunication sans fil (CTS), notamment pour la mise en oeuvre d'un procédé selon l'une des revendications précédentes, comprenant une station de base (CTS-FP) et comprenant au moins une station mobile (MS) initialisée auprès de la station de base (CTS-FP), avec lequel un central (Z) d'un réseau de télécommunication superposé (PLMN ; RTPC, RNIS) transfère par le biais du réseau de télécommunication superposé des paramètres de fonctionnement tout d'abord à la station de base (CTS-FP) ou à l'une de stations mobiles (MS) du système de télécommunication sans fil (CTS), **caractérisé en ce que** la station de base (CTS-FP) retransmet ensuite les paramètres de fonctionnement si possible vers toutes les stations mobiles initialisées ou la station mobile (MS) les retransmet à la fois vers la station de base (CTS-FP) et si possible vers toutes les autres stations mobiles (MS) initialisées en vue de leur activation.
